# EUROPEAN PATENT APPLICATION

(11) **EP 3 741 975 A1**
(43) Date of publication of application: **25.11.2020**
(21) Application number: 19754531.2
(22) Date of filing: 29.01.2019
(51) Int. Cl.: F02D 29/02, B60R 21/0134, B60T 7/12, B60W 10/04, B60W 10/06, B60W 10/18, F02D 9/02, F02D 11/10

(54) **VEHICLE CONTROL DEVICE**

(30) Priority: 16.02.2018 JP 2018025812
(71) Applicant: MAZDA MOTOR CORPORATION, Hiroshima 730-8670 (JP)
(72) Inventor: CHEN, Xi, Aki-gun, Hiroshima 730-8670 (JP); NAKAGAMI, Takashi, Aki-gun, Hiroshima 730-8670 (JP); KATAYAMA, Shota, Aki-gun, Hiroshima 730-8670 (JP); TEZUKA, Rie, Aki-gun, Hiroshima 730-8670 (JP)
(74) Representative: Behr, Wolfgang
(86) International application number: PCT/JP2019/002830
(87) International publication number: WO 2019/159676

(57) **Abstract**

A brake controller operates PTC when an obstacle sensor detects an obstacle ahead, a vehicle speed sensor detects a vehicle speed equal to or lower than a predetermined vehicle speed, and an operation of an accelerator pedal equal to or greater than a predetermined depression amount is detected. When detection of the obstacle ahead is lost while the PTC is operating and the PTC is to be cancelled, the brake controller operates a power limiting control if a depression operation of the accelerator pedal is detected. The power limiting control limits an engine power to cause acceleration to be lower than a requested acceleration corresponding to a depression amount of the accelerator pedal.

## Description

### Technical Field

The present invention relates to autonomous braking of a vehicle.

### Background Art

In recent years, a vehicle is known which is provided with an unintended acceleration suppression control for suppressing damage by a collision caused by a sudden acceleration of an own vehicle by an erroneous operation of an accelerator pedal. The unintended acceleration suppression control is a control which suppresses a sudden acceleration of the vehicle by suppressing an engine power in a vehicle speed being equal to or lower than a predetermined vehicle speed, when pressing down of the accelerator pedal equal to or larger than a predetermined amount is detected in a state where there is an obstacle ahead of the own vehicle within a predetermined distance.

Patent Literature 1 discloses a vehicle which is provided with a control against unintended accelerator depression that is equivalent to the unintended acceleration suppression control, and a pre-crash brake (PB) control.

Specifically, Patent Literature 1 discloses a technique of avoiding a state of both the control against unintended accelerator depression and the PB control not operating in a scene in which a sudden acceleration of the vehicle needs to be suppressed, even when the vehicle speed becomes equal to or higher than a predetermined vehicle speed so that a quit condition for the control against unintended accelerator depression is satisfied. This is achieved by continuing the PB control even when an accelerator operation amount is large.

When detection of the obstacle ahead is lost, the unintended acceleration suppression control is immediately cancelled. Accordingly, when the driver keeps pressing down the accelerator pedal after the cancellation, an engine power is controlled to produce an acceleration corresponding to the depression amount of the accelerator pedal, and hence, the vehicle may suddenly accelerate.

In Patent Literature 1, when the quit condition for the control against unintended accelerator depression is satisfied, in a scene in which a sudden acceleration of the vehicle needs to be suppressed, the PB control is performed. However, the PB control is operated only if the vehicle speed is equal to or higher than a predetermined vehicle speed. Thus, in Patent Literature 1, both the control against unintended accelerator depression and the PB control are not operated in a scene in which detection of the obstacle ahead is lost so that the quit condition for the control against unintended accelerator depression is satisfied in a state that the vehicle speed is lower than the predetermined vehicle speed. Accordingly, in Patent Literature 1, there is a problem that a sudden acceleration of the vehicle cannot be suppressed in the above scene.

### Citation List

### Patent Literature

Patent Literature 1: JP 2013-129228 A

### Summary of Invention

The present invention has been made to solve such a problem. An object of the present invention is to provide a vehicle control device that suppresses occurrence of a sudden acceleration of a vehicle after quitting an operation of a brake control.

A vehicle control device according to one aspect of the present invention includes:
an obstacle sensor configured to detect an obstacle ahead of an own vehicle;
a vehicle speed sensor configured to detect a vehicle speed of the own vehicle;
an accelerator operation sensor configured to detect an accelerator operation; and
a brake controller configured to operate a brake control when the obstacle ahead is detected by the obstacle sensor, the brake control including at least one of reduction in an engine power and autonomous braking, wherein
when detection of the obstacle ahead is lost while the brake control is operating and the brake control is to be cancelled, the brake controller operates a power limiting control if the accelerator operation is detected, the power limiting control limiting the engine power to cause acceleration to be lower than a requested acceleration corresponding to an operating amount of the accelerator operation.

According to the present invention, occurrence of a sudden acceleration of a vehicle after quitting a brake control operation can be suppressed.

### Brief Description of Drawings

FIG.1 is a block diagram illustrating a configuration of a vehicle control device according to an embodiment of the present invention.
FIG. 2 is a chart illustrating an example of an operating timing of a pre-collision throttle control (PTC).
FIG. 3 is a flowchart illustrating an example of a flag setting process performed by a brake controller illustrated in FIG. 1.
FIG. 4 is a flowchart illustrating an example of a process performed by a vehicle control device where a flag F is set to 1 or 2.
FIG. 5 is a table in which processes performed by the vehicle control device according to the present embodiment are summarized.

### Description of Embodiment

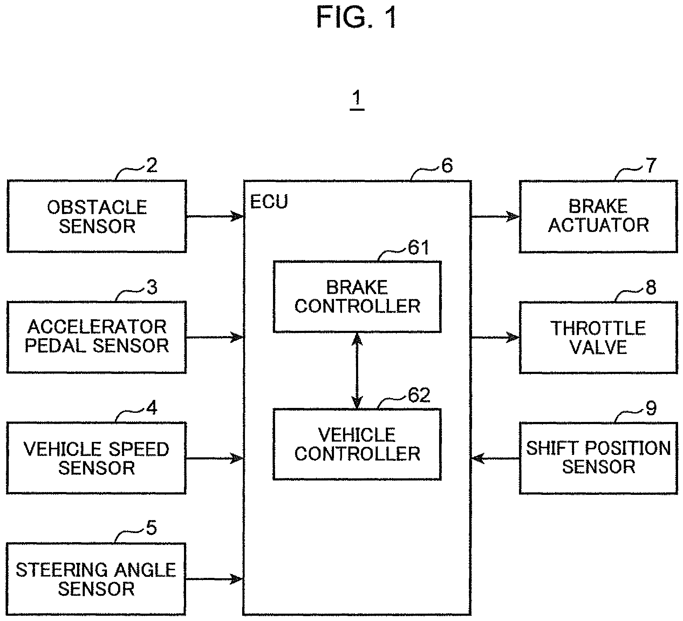

FIG.1 is a block diagram illustrating a configuration of a vehicle control device 1 according to an embodiment of the present invention. The vehicle control device 1 is mounted in a four-wheel vehicle and performs a brake assist control on the four-wheel vehicle. The vehicle control device 1 includes an obstacle sensor 2, an accelerator pedal sensor 3, a vehicle speed sensor 4, a steering angle sensor 5, an electronic control unit (ECU) 6, a brake actuator 7, a throttle valve 8, and a shift position sensor 9.

The obstacle sensor 2 includes, for example, a laser radar or a sonar. For example, the laser radar is provided to a front grill of an own vehicle. The laser radar detects presence or absence of an obstacle ahead and a distance from the own vehicle to the obstacle ahead by emitting a laser beam, scanning a predetermined angular range in front of the own vehicle with the laser beam, and receiving the reflected laser beam. For example, the sonar is provided to the front grill of the own vehicle. The sonar detects presence or absence of an obstacle ahead and a distance from the own vehicle to the obstacle ahead by emitting a sonic wave to a front side of the own vehicle, and receiving the reflected sonic wave. The obstacle ahead is a parked vehicle, a travelling vehicle, or an object other than a vehicle existing just in front along a travelling direction of the own vehicle.

The accelerator pedal sensor 3 (an example of the accelerator operation sensor) includes, for example, a potentiometer angle sensor in which a contact point slides on a resistance element. The accelerator pedal sensor 3 detects a depression amount of the accelerator pedal, converts the depression amount into an electric signal, and outputs the electric signal to the ECU 6. In the present embodiment, the accelerator pedal sensor 3 indicates the depression amount of the accelerator pedal by a rate of an actual depression amount to the maximum depression amount of the accelerator pedal which is 100.

The vehicle speed sensor 4 includes, for example, a wheel speed sensor and detects a vehicle speed of the own vehicle. The wheel speed sensor includes, for example, a gear-shaped rotor provided to a rotating part such as a brake drum, and a sensing unit disposed with a certain gap to the rotor and including a coil, a magnetic pole, and the like. The wheel speed sensor detects a rotational speed of a wheel based on an alternating voltage generated in the coil by rotation of the rotor.

The steering angle sensor 5 is attached, for example, to a steering shaft and outputs to the ECU 6 a signal corresponding to a steering direction, a neutral position, and a steering angle. The steering angle sensor 5 includes, for example, a disk-shaped slit-plate that rotates in conjunction with a steering wheel, and a photointerrupter disposed to sandwich the slit-plate.

The ECU 6 includes a computer including a processor such as a CPU, and a memory such as a ROM and a RAM, and totally controls the vehicle control device 1. In the present embodiment, the ECU 6 has a function of a brake controller 61 and a vehicle controller 62. The brake controller 61 and the vehicle controller 62 are each implemented by the processor of the ECU 6 executing a predetermined control program. However, this is merely an example, and the brake controller 61 and the vehicle controller 62 may be constituted by different computers, respectively.

The brake controller 61 operates pre-collision throttle control (PTC) when the obstacle sensor 2 detects an obstacle ahead, the vehicle speed sensor 4 detects a vehicle speed equal to or lower than a predetermined vehicle speed, and an operation of the accelerator pedal with a depression amount equal to or larger than a predetermined depression amount (an example of a predetermined operating amount) is detected. The PTC is a sudden acceleration suppression control to mitigate damage by collision caused by a sudden acceleration of an own vehicle by an erroneous operation of the accelerator pedal.

The PTC includes a PTC reduction control that reduces an engine power of the own vehicle, and a PTC autonomous braking. When the PTC speed-reduction control is operated, the brake controller 61 sets a predetermined requested deceleration, and outputs an opening degree command for adjusting the opening degree of the throttle valve 8 to stop fuel supply to the engine to achieve the set requested deceleration, and thereby the engine power is reduced. When the PTC autonomous braking is operated, the brake controller 61 outputs a braking command to provide a brake with a braking force of a predetermined requested deceleration to achieve the predetermined requested deceleration. The predetermined requested deceleration may be, for example, a constant value regardless of the own vehicle speed or may take a larger value for a larger own vehicle speed in a stepwise or continuous manner.

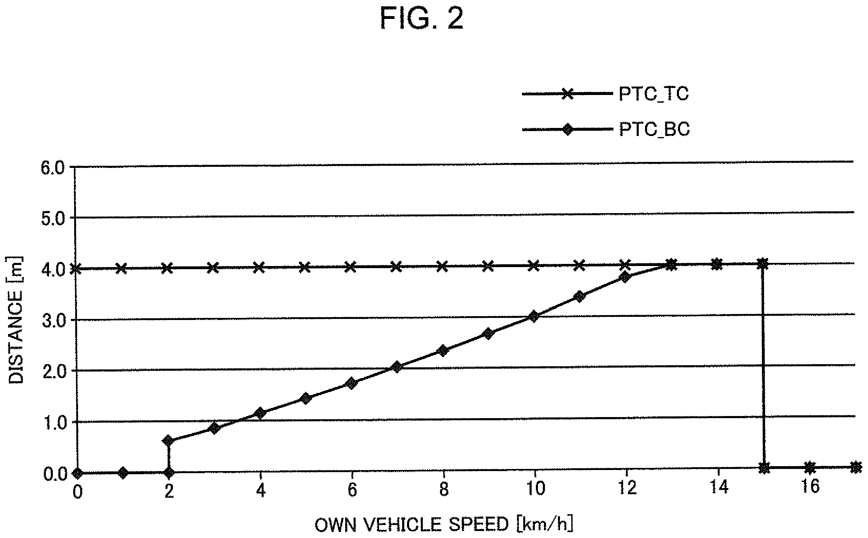

The predetermined vehicle speed may be 15 km/h as indicated by a graph PTC _BC in FIG. 2. However, this is merely an example, and the predetermined vehicle speed may be a value other than 15 km/h as long as the value is suitable as an upper limit value of the vehicle speed within which a sudden acceleration by an erroneous operation of the accelerator pedal needs to be suppressed. The predetermined depression amount may be, for example, a minimum value of the depression amount by which a driver may press down the accelerator pedal by an erroneous operation, and is 20 % in the present embodiment. However, this is merely an example, and the predetermined depression amount may be a value larger than 20 % or smaller than 20 %.

When detection of the obstacle ahead is lost while the PTC is operating and the PTC is to be cancelled, the brake controller 61 operates a power limiting control if a depression operation of the accelerator pedal is detected, the power limiting control limiting the engine power to cause the acceleration to be smaller than a requested acceleration corresponding to a depression amount of the accelerator pedal (an example of the operating amount). This suppresses a sudden acceleration of the vehicle that may occur after the operation of the PTC is terminated.

The brake controller 61 periodically calculates an upper limit of acceleration for the power limiting control. The brake controller 61 sets a value of the upper limit of acceleration smaller, as a distance between the obstacle ahead and the own vehicle becomes shorter and as a depression amount of the accelerator pedal becomes larger. This sets a value of the upper limit of acceleration smaller as the risk of collision becomes higher, and makes it possible to further limit the acceleration of the vehicle.

In this case, when a current value of the upper limit of acceleration becomes larger than a previous value of the upper limit of acceleration, the brake controller 61 sets a smaller value among the current value of the upper limit of acceleration and a sum of the previous value of the upper limit of acceleration and a predetermined jerk limiting value as a final upper limit of acceleration, and performs the power limiting control. Thus, in a scene where the risk of collision is gradually decreasing, the power limiting control can be operated while further gradually raising the final upper limit of acceleration.

The current value of the upper limit of acceleration is the latest value of the upper limit of acceleration, and the previous value of the upper limit of acceleration is the upper limit of acceleration calculated just before the latest value.

The jerk limiting value is a fixed value previously given based on responsiveness of the engine mounted on the vehicle. The jerk limiting value takes a larger value as the responsiveness of the engine mounted on the vehicle becomes higher. However, this is merely an example, and the jerk limiting value may take a larger value as a difference between the current value and the previous value of the upper limit of acceleration becomes larger.

Meanwhile, when the current value of the upper limit of acceleration becomes smaller than the previous value of the upper limit of acceleration, the brake controller 61 sets the current value of the upper limit of acceleration as the final upper limit of acceleration, and performs the power limiting control. This enables to further limit the acceleration of the vehicle as the risk of collision increases while the power limiting control is operating.

When the final upper limit of acceleration is larger than the requested acceleration, the brake controller 61 may output an operating command to the vehicle controller 62 to perform a normal control to control the engine power to achieve the requested acceleration. When the final upper limit of acceleration is smaller than the requested acceleration, the brake controller 61 may control the engine power to achieve the final upper limit of acceleration.

When the PTC is not operating and the power limiting control is not operating, the vehicle controller 62 operates a normal control to control the engine power to achieve the requested acceleration corresponding to the depression amount of the accelerator pedal. In the normal control, the opening degree of the throttle valve 8 is adjusted to achieve the requested acceleration.

The brake actuator 7 causes the brake (not shown) to generate a braking force instructed by a braking command which is output from the ECU 6. To do so, for example, the brake actuator 7 operates the brake with a hydraulic pressure corresponding to the braking force indicated by the braking command. The brake is, for example, a disk brake or a drum brake that brakes a wheel of the vehicle. In response to the opening degree command from the ECU 6, the throttle valve 8 adjusts the opening degree of the valve to adjust an amount of air taken into an engine (not shown).

The shift position sensor 9 is for detecting a shift position set by the driver manipulating a shift lever. If the vehicle is a four-wheel automatic car, the shift position includes, for example, "D (drive)-range" indicating a forward drive, "P (parking)-range" indicating parking, "R-range" indicating a rearward drive, and "N (neutral)-range" indicating a neutral. The vehicle may be, instead of a four-wheel automatic car, a four-wheel manual transmission car.

FIG. 2 is a chart illustrating an example of an operating timing of the PTC. In FIG. 2, a vertical axis represents a distance (m) between the obstacle ahead and the own vehicle, and a horizontal axis represents an own vehicle speed (km/h).

In FIG. 2, a graph plotted with rhomboid-shaped points is a graph (hereinafter referred to as "graph PTC_BC") indicating an operating timing of the PTC autonomous braking. When the distance to the obstacle ahead and the own vehicle speed are located in a region below the graph PTC_BC, the brake controller 61 operates the PTC autonomous braking.

The graph PTC_BC keeps the distance to the obstacle ahead at 0 m in a vehicle speed range where the own vehicle speed is from 0 km/h to 2 km/h. Thus, the brake controller 61 does not operate the PTC autonomous braking in this vehicle speed range. According to the graph PTC_BC, when the own vehicle speed is in a vehicle speed range from 2 km/h to 15 km/h, the distance to the obstacle ahead increases as the own vehicle speed increases but within an upper limit of 4 m. Thus, in a vehicle speed range in which the own vehicle speed is from 2 km/h to 13 km/h at which the distance to the vehicle ahead is 4 m, the brake controller 61 does not operate the PTC autonomous braking unless the obstacle ahead is nearer for a lower own vehicle speed. In a vehicle speed range in which the own vehicle speed is from 13 km/h to 15 km/h, the brake controller 61 operates the PTC autonomous braking when the distance to the obstacle ahead becomes 4 m or smaller.

In FIG. 2, a graph plotted with x-marks is a graph (hereinafter referred to as "graph PTC_TC") indicating an operating timing of the PTC reduction control. When the distance to the obstacle ahead and the own vehicle speed are located in a region below the graph PTC TC, the brake controller 61 operates the PTC reduction control.

The graph PTC_TC keeps the distance to the obstacle ahead at 4 m in a vehicle speed range where the own vehicle speed is from 0 km/h to 15 km/h. Thus, in a vehicle speed range in which the own vehicle speed is equal to or lower than 15 km/h, the brake controller 61 operates the PTC reduction control when the distance to the obstacle ahead becomes 4 m or smaller.

In the present embodiment as described above, only the PTC speed-reduction control is performed in the vehicle speed range from 0 km/h to 2 km/h, and both the PTC speed-reduction control and the PTC autonomous braking are performed in the vehicle speed range from 2 km/h to 15km/h.

In FIG. 2, the lower limit value of the vehicle speed range in which the PTC autonomous braking operates is set to 2 km/h. This is because the brake controller 61 determines whether the PTC is operated mainly using data measured by a sonar, and the lower limit value of the own vehicle speed above which the sonar can detect the obstacle is 2 km/h. However, this is merely an example. In a case where the brake controller 61 determines whether the PTC is operated using data measured by a laser radar, the lower limit value of the vehicle speed range in which the PTC autonomous braking operates may be set to the lower limit value of the own vehicle speed above which the laser radar can detect the obstacle (for example, 4 km/h).

In FIG. 2, the upper limit value of the vehicle speed range in which the PTC autonomous braking and the PTC speed-reduction control operate is set to 15 km/h. This is because the upper limit value of the own vehicle speed at which a sudden acceleration occurs by an erroneous depression of the accelerator pedal is assumed to be about 15 km/h.

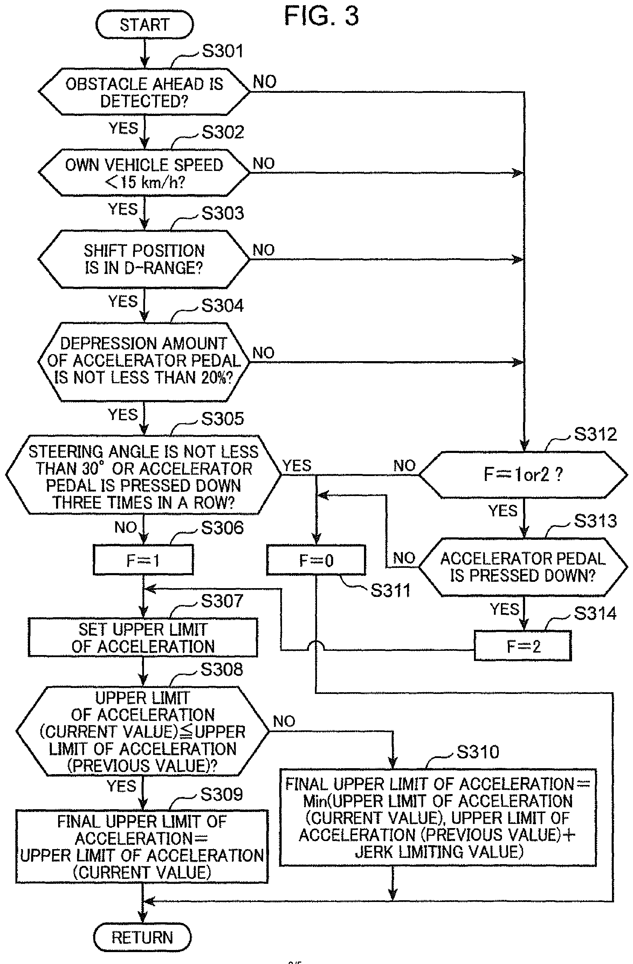

FIG. 3 is a flowchart illustrating an example of a flag setting process performed by the brake controller 61 illustrated in FIG. 1. In S301, the brake controller 61 determines whether or not the obstacle ahead is detected from data measured by the obstacle sensor 2. If the obstacle ahead is detected (YES in S301), the brake controller 61 determines whether or not the own vehicle speed is lower than 15 km/h from data measured by the vehicle speed sensor 4 (S302).

If the own vehicle speed is lower than 15 km/h (YES in S302), the brake controller 61 determines whether or not the shift position is in the D-range from data measured by the shift position sensor 9 (S303). If the shift position is in the D-range (YES in S303), the brake controller 61 determines whether or not the depression amount of the accelerator pedal is equal to or larger than 20 % from data measured by the accelerator pedal sensor 3 (S304). If the depression amount of the accelerator pedal is equal to or larger than 20% (YES in S304), the brake controller 61 determines whether or not the steering angle of the steering is equal to or larger than 30° or the accelerator pedal has been pressed down three times in a row (S305). The brake controller 61 may obtain the steering angle of the steering from data measured by the steering angle sensor 5. The brake controller 61 may determine that the driver has pressed down the accelerator pedal if the depression amount in the data measured by the accelerator pedal sensor 3 is larger than a threshold value (for example, 0). The brake controller 61 may determine that the accelerator pedal has been pressed down three times in a row if a set of operation of pressing down and releasing (or stop pressing down) the accelerator pedal has been detected three times in a row in a certain period.

If the steering angle of the steering is smaller than 30° and the accelerator pedal has not been pressed down three times or more in a row (NO in S305), the brake controller 61 sets a flag F to 1 (S306).

That is, if it is determined YES in all of S301 to S304 and NO in S305, the brake controller 61 presumes that the accelerator pedal has erroneously been pressed down and sets the flag F to 1 to operate the PTC (S306). Meanwhile, even if all the determination conditions in S301 to S304 are YES, the brake controller 61 presumes that the accelerator pedal has not erroneously been pressed down if the steering angle is equal to or larger than 30° or the accelerator pedal has been pressed down three times in a row, and sets the flag F to 0 to disallow an operation of the PTC (S311).

The flag F takes a value of 0 indicating that the PTC is not operated, 1 indicating that the PTC is operated, and 2 indicating that the power limiting control is operated. The flag F is set to 1 if all the determination conditions in S301 to S304 are YES and the condition for determination in S305 is NO. The flag F is set to 2 if it is determined negative in at least one of S301 to S304 and the depression of the accelerator pedal is detected while the PTC is operating.

If the obstacle ahead is not being detected (NO in S301), the process proceeds to S312. Even if the obstacle ahead is being detected (YES in S301), if the own vehicle speed is 15 km/h or higher (NO in S302), the process proceeds to S312. Even if the obstacle ahead is being detected (YES in S301) and the own vehicle speed is lower than 15 km/h (YES in S302), if the shift position is not in the D-range (NO in S303), the process proceeds to S312. Even if the obstacle ahead is being detected (YES in S301), the own vehicle speed is lower than 15 km/h (YES in S302), and the shift position is in the D-range (YES in S303), if the depression amount of the accelerator pedal is smaller than 20 % (NO in S304), the process proceeds to S312.

In S312, the brake controller 61 determines whether the flag F is 1 or 2. If the flag F is neither 1 nor 2, that is, if the flag F is 0 (NO in S312), the flag F is kept at 0 (S311).

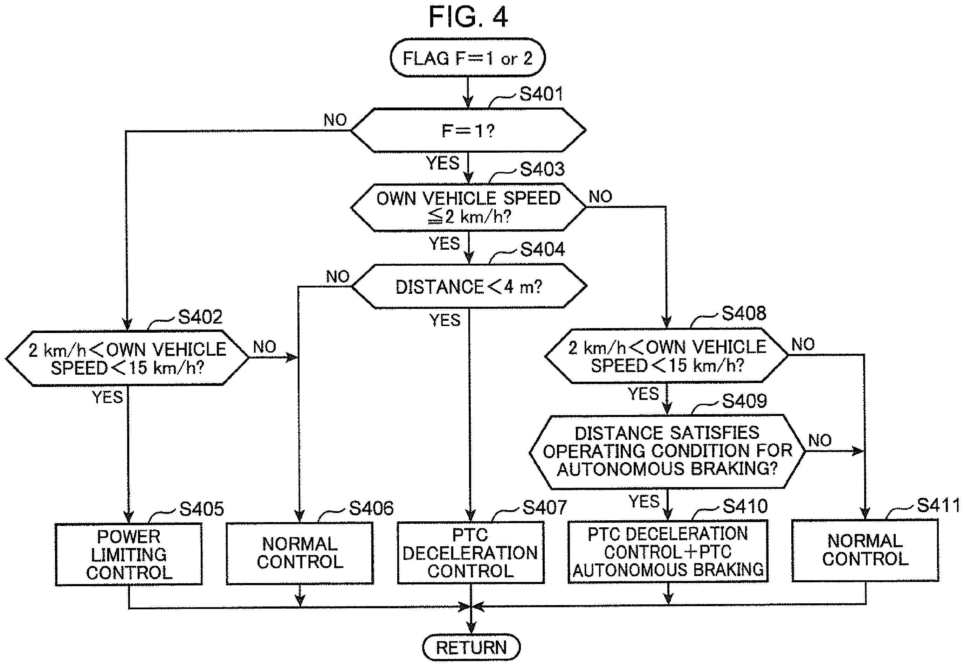

Meanwhile, if the flag F is 1 or 2 (YES in S312), the brake controller 61 determines whether or not the accelerator pedal is being pressed down (S313). If the accelerator pedal is being pressed down (YES in S313), the brake controller 61 sets the flag F to 2 (S314). Accordingly, even if detection of the obstacle ahead is lost (NO in S301), the own vehicle speed becomes lower than 15 km/h (NO in S302), or the shift position is changed out of the D-range (NO in S303) while the PTC is operating, the flag F is set to 2 as long as the accelerator pedal is being pressed down. As a result, as will be described using FIG. 4, the power limiting control is operated and occurrence of a sudden acceleration of the own vehicle is suppressed after the operation of the PTC is terminated.

For example, while the PTC is operating, detection of the obstacle ahead may be lost by the own vehicle or the vehicle ahead changing lanes or the like, resulting in cancellation of the operation of the PTC. If the accelerator pedal is still pressed down in this case, the vehicle is accelerated at a requested acceleration corresponding to the depression amount, and may cause a sudden acceleration of the vehicle. In such a scene, in the present embodiment, the power limiting control is operated to suppress occurrence of the sudden acceleration of the vehicle after the operation of the PTC is terminated.

If the flag F is set to 2 (S314), the process proceeds to S307. In S307, the brake controller 61 sets an upper limit of acceleration for the PTC. The brake controller 61 has an upper limit of acceleration setting map in which the upper limit of acceleration corresponding to the distance between the obstacle ahead and the own vehicle, and the depression amount of the accelerator pedal is previously set. The brake controller 61 may refer to the upper limit of acceleration setting map to set the upper limit of acceleration corresponding to the current distance between the obstacle ahead and the own vehicle, and the current depression amount of the accelerator pedal. In the upper limit of acceleration setting map, a value of the upper limit of acceleration is set smaller as a distance between the vehicle ahead and the own vehicle becomes shorter as a depression amount of the accelerator pedal becomes larger.

In S308, the brake controller 61 determines whether or not the upper limit of acceleration (current value) is equal to or lower than the upper limit of acceleration (previous value). If the upper limit of acceleration (current value) is equal to or lower than the upper limit of acceleration (previous value) (YES in S308), the risk of collision is increasing, and hence, the brake controller 61 sets the upper limit of acceleration (current value) as a final upper limit of acceleration (S309).

Meanwhile, if the upper limit of acceleration (current value) is higher than the upper limit of acceleration (previous value) (NO in S308), the risk of collision is decreasing, and hence, the brake controller 61 sets the final upper limit of acceleration by computing Min (upper limit of acceleration (current value), upper limit of acceleration (previous value) + jerk limiting value) (S310). Here, Min is an operator of selecting a smaller one among the upper limit of acceleration (current value) and the sum of the upper limit of acceleration (previous value) and the jerk limiting value. When S309 and S310 finish, the process returns to S301. In S310, the final upper limit of acceleration can further gradually be increased, since the smaller one among the upper limit of acceleration (current value) and the sum of the upper limit of acceleration (previous value) and the jerk limiting value is selected

As described above, the brake controller 61 performs the flow in FIG. 3 repeatedly while the vehicle is travelling, and calculates the upper limit of acceleration repeatedly while setting the flag F.

FIG. 4 is a flowchart illustrating an example of a process performed by the vehicle control device 1 where the flag F is set to 1 or 2. The flow in FIG. 4 is repetitively executed when the flag F is 1 or 2. In S401, the vehicle controller 62 determines whether or not the flag F is 1. If the flag F is 2 (NO in S401), the process proceeds to S402, and if the flag F is 1, the process proceeds to S403.

In S402, if the own vehicle speed is in the vehicle speed range from 2 km/h to 15 km/h (YES in S402), the brake controller 61 executes the power limiting control (S405). Meanwhile, if the own vehicle speed is not in the vehicle speed range from 2 km/h to 15 km/h (NO in S402), the brake controller 61 instructs the vehicle controller 62 to perform the normal control. In the normal control, the engine power is controlled to achieve the requested acceleration. The requested acceleration is used for the normal control to accelerate the vehicle at an acceleration corresponding to the depression amount of the accelerator pedal. A value of the requested acceleration is set to increase as a depression amount of the accelerator pedal increases.

Meanwhile, if the flag F is 1 (YES in S401), the brake controller 61 determines whether or not the own vehicle speed is equal to or lower than 2 km/h (S403). If the own vehicle speed is equal to or lower than 2 km/h (YES in S403), the brake controller 61 determines whether or not the distance between the obstacle ahead and the own vehicle is smaller than 4 m (S404). If the distance between the obstacle ahead and the own vehicle is smaller than 4 m (YES in S404), the brake controller 61 operates the PTC speed-reduction control (S407). That is, if S403 is YES and S404 is YES, the distance between the obstacle ahead and the own vehicle, and the own vehicle speed are below the graph PTC_TC in FIG. 2, so that the PTC speed-reduction control is operated.

Meanwhile, if the distance between the obstacle ahead and the own vehicle is equal to or larger than 4 m (NO in S404), the brake controller 61 outputs an operating command for the normal control to the vehicle controller 62 to operate the normal control (S406).

If the own vehicle speed is higher than 2 km/h (NO in S403), and if the own vehicle speed is in the vehicle speed range from 2 km/h to 15 km/h (YES in S408), the brake controller 61 determines whether or not the distance between the obstacle ahead and the own vehicle satisfies the operating condition for the PTC autonomous braking (S409). When the distance between the obstacle ahead and the own vehicle, and the own vehicle speed are below the graph PTC_BC illustrated in FIG. 2, the brake controller 61 determines that the operating condition for the PTC autonomous braking is satisfied.

If the distance between the obstacle ahead and the own vehicle satisfies the operating condition for the PTC autonomous braking (YES in S409), the brake controller 61 operates the PTC reduction control and the PCT autonomous braking (S410). Meanwhile, if the own vehicle speed is not in the vehicle speed range from 2 km/h to 15 km/h (NO in S408), or, if the operating condition for the PTC autonomous braking is not satisfied (NO in S409), the brake controller 61 outputs an operating command for the normal control to the brake controller 61 to operate the normal control (S411).

When the processes in S405, S406, S407, S410, and S411 finish, the process returns to S401.

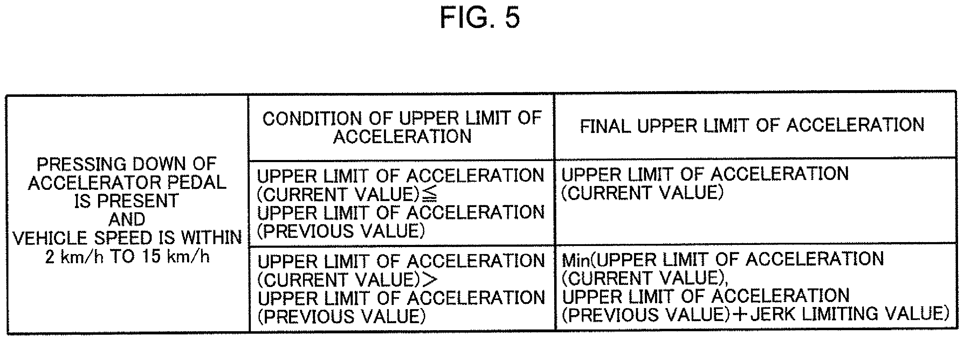

FIG. 5 is a table in which a process performed by the vehicle control device 1 according to the present embodiment are summarized. In this table, conditions of the upper limit of acceleration, and the final upper limit of acceleration corresponding to the upper limit of acceleration are indicated, for a case where the pressing down of the accelerator pedal is present and the own vehicle speed is in the vehicle speed range from 2 km/h to 15 km/h. If the upper limit of acceleration (current value) is equal to or lower than the upper limit of acceleration (previous value), the upper limit of acceleration (current value) is set as the final upper limit of acceleration as shown in the table. This setting corresponds to S309 in FIG. 3.

Meanwhile, if the upper limit of acceleration (current value) is higher than the upper limit of acceleration (previous value), Min (upper limit of acceleration (current value), upper limit of acceleration (previous value) + jerk limiting value) is set as the final upper limit of acceleration. This setting corresponds to S310 in FIG. 3.

According to the present embodiment as described above, even if detection of the obstacle ahead is lost while the PTC is operating, the power limiting control is operated if an accelerator operation is detected, and thus occurrence of a sudden acceleration of the vehicle after terminating the operation of the brake control can be suppressed.

The present embodiment includes exemplary modifications described below.
(1) In the embodiment described above, the PTC is used as the brake control. The present invention is not limited to such a configuration. Autonomous emergency braking may be used. The autonomous emergency braking has no limitation on the vehicle speed range like in the PTC. The autonomous emergency braking is autonomous braking that is operated when there is an obstacle ahead of an own vehicle within a predetermined distance corresponding to the own vehicle speed. When the accelerator pedal is pressed down, the driver is presumed to have an intention to accelerate and the autonomous emergency braking is cancelled.
   In this exemplary modification, while the autonomous emergency braking is operating, when the distance between the obstacle ahead and the own vehicle becomes equal to or larger than the speed corresponding to the own vehicle speed and the autonomous emergency braking is stopped, the brake controller 61 operates the power limiting control if the accelerator pedal is being pressed down. This can suppress occurrence of a sudden acceleration of the vehicle after quitting the operation of the autonomous emergency braking.
(2) In the embodiment described above, the PTC includes the PTC autonomous braking, but the PTC may include only the PTC reduction control.
(3) In FIG. 2, the upper limit value of the vehicle speed range in which the PTC autonomous braking is operated and the upper limit value of the vehicle speed range in which the PTC speed-reduction control is operated are set to the same speed of 15 km/h. However, this is merely an example, and the upper limit values may be set to different values.
(4) In S305 in FIG. 3, it is determined as YES if the operation of the accelerator pedal is detected three times in a row. However, this is merely an example. It may be determined as YES if the operation of the accelerator pedal is detected two times, or four or more times.
(5) In the table in FIG. 5, a condition of the steering angle may be added to the condition of the accelerator operation. For example, it may be determined that the condition of the accelerator operation is "present" if the pressing down of the accelerator pedal is present and the steering angle is smaller than a predetermined value (for example, 30°). In this case, the condition of "steering angle of 30° or larger" is added in addition to the condition of "pressing down of accelerator pedal is present" in S313 in FIG. 3.

### (Summary of Embodiment)

A vehicle control device according to one aspect of the present invention includes:
an obstacle sensor configured to detect an obstacle ahead of an own vehicle;
a vehicle speed sensor configured to detect a vehicle speed of the own vehicle;
an accelerator operation sensor configured to detect an accelerator operation; and
a brake controller configured to operate a brake control when the obstacle ahead is detected by the obstacle sensor, the brake control including at least one of reduction in an engine power and autonomous braking, wherein
when detection of the obstacle ahead is lost while the brake control is operating and the brake control is to be cancelled, the brake controller operates a power limiting control if the accelerator operation is detected, the power limiting control limiting the engine power to cause acceleration to be lower than a requested acceleration corresponding to an operating amount of the accelerator operation.

According to this aspect, even if detection of the obstacle ahead is lost while the brake control is operating, the power limiting control that limits the engine power is operated if an accelerator operation is detected, and thus occurrence of a sudden acceleration of the vehicle after quitting the operation of the brake control can be suppressed.

In the above aspect, it is preferable that the brake controller
sets a value of an upper limit of acceleration in the power limiting control to be smaller as a distance between the obstacle ahead and the own vehicle is shorter, and
sets a smaller value among the current value of the upper limit of acceleration and a sum of the previous value of the upper limit of acceleration and a predetermined jerk limiting value as a final upper limit of acceleration, and operates the power limiting control, when the current value of the upper limit of acceleration becomes larger than the previous value of the upper limit of acceleration.

According to this aspect, when the current value of the upper limit of acceleration becomes larger than the previous value of the upper limit of acceleration, that is, when the risk of the own vehicle colliding with the obstacle ahead decreases while the power limiting control is operating, the smaller value among the current value of the upper limit of acceleration and the sum of the previous value of the upper limit of acceleration and the predetermined jerk limiting value is set as the final upper limit of acceleration, and the power limiting control is operated. Therefore, in this aspect, in a scene where the risk of collision is gradually decreasing, it is possible to operate the power limiting control while gradually raising the final upper limit of acceleration.

In the above aspect, it is preferable that the brake controller sets the current value of the upper limit of acceleration as the final upper limit of acceleration, and operates the power limiting control, when the current value of the upper limit of acceleration becomes smaller than the previous value of the upper limit of acceleration.

According to this aspect, when the current value of the upper limit of acceleration becomes smaller than the previous value of the upper limit of acceleration, that is, when the risk of the own vehicle colliding with the obstacle ahead increases while the power limiting control is operating, the current value of the upper limit of acceleration is set as the final upper limit of acceleration, and the power limiting control is operated. Thus, it is possible to further limit the acceleration of the vehicle when the risk of collision is increasing while the power limiting control is operating.

In the above aspect, it is preferable that the brake controller further sets the value of the upper limit of acceleration to be smaller as the operating amount of the accelerator operation increases.

According to this aspect, the value of the upper limit of acceleration is set smaller as a distance between the obstacle ahead and the own vehicle becomes smaller and also as an operating amount of the accelerator operation becomes larger. Thus, the acceleration of the vehicle can be further limited as a risk of collision is higher.

In the above aspect, it is preferable that the brake control is a sudden acceleration suppression control which is operated when the obstacle ahead is detected, a vehicle speed equal to or lower than a predetermined vehicle speed is detected, and the accelerator operation equal to or larger than a predetermined operating amount is detected, and
when detection of the obstacle ahead is lost while the sudden acceleration suppression control is operating and the sudden acceleration suppression control is to be cancelled, the brake controller operates the power limiting control if the accelerator operation is detected.

According to this aspect, it is possible to suppress occurrence of a sudden acceleration of the vehicle after quitting the operation of sudden acceleration suppression which is operated when an erroneous operation of the accelerator is made by the driver.

## Claims

1. A vehicle control device comprising:
an obstacle sensor configured to detect an obstacle ahead of an own vehicle;
a vehicle speed sensor configured to detect a vehicle speed of the own vehicle;
an accelerator operation sensor configured to detect an accelerator operation; and
a brake controller configured to operate a brake control when the obstacle ahead is detected by the obstacle sensor, the brake control including at least one of reduction in an engine power and autonomous braking, wherein
when detection of the obstacle ahead is lost while the brake control is operating and the brake control is to be cancelled, the brake controller operates a power limiting control if the accelerator operation is detected, the power limiting control limiting the engine power to cause acceleration to be lower than a requested acceleration corresponding to an operating amount of the accelerator operation.

2. The vehicle control device according to claim 1, wherein
the brake controller is configured to
set a value of an upper limit of acceleration in the power limiting control to be smaller as a distance between the obstacle ahead and the own vehicle is shorter, and
set a smaller value among the current value of the upper limit of acceleration and a sum of the previous value of the upper limit of acceleration and a predetermined jerk limiting value as a final upper limit of acceleration, and operates the power limiting control, when the current value of the upper limit of acceleration becomes larger than the previous value of the upper limit of acceleration.

3. The vehicle control device according to claim 2, wherein the brake controller is configured to set the current value of the upper limit of acceleration as the final upper limit of acceleration, and to operate the power limiting control, when the current value of the upper limit of acceleration becomes smaller than the previous value of the upper limit of acceleration.

4. The vehicle control device according to claim 2 or 3, wherein the brake controller is further configured to set the value of the upper limit of acceleration to be smaller as the operating amount of the accelerator operation increases.

5. The vehicle control device according to any one of claims 1 to 4, wherein
the brake control is a sudden acceleration suppression control which is operated when the obstacle ahead is detected, a vehicle speed equal to or lower than a predetermined vehicle speed is detected, and the accelerator operation equal to or larger than a predetermined operating amount is detected, and
when detection of the obstacle ahead is lost while the sudden acceleration suppression control is operating and the sudden acceleration suppression control is to be cancelled, the brake controller is configured to operate the power limiting control if the accelerator operation is detected.
